# EUROPEAN PATENT APPLICATION

(11) **EP 2 495 936 A1**
(43) Date of publication of application: **05.09.2012**
(21) Application number: 11181873.8
(22) Date of filing: 19.09.2011
(51) Int. Cl.: H04L 29/08, H04W 4/02, H04W 84/18

(54) **Server for grouping devices based on sounds collected and method therefor**

(30) Priority: 04.03.2011 KR 20110019473
(71) Applicant: Samsung Electronics Co., Ltd., Suwon-si Gyeonggi-do 442-742 (KR)
(72) Inventor: Kim, Moon Su, Chungcheongbuk-do (KR); Kang, Chun-un, Seoul (KR); Lee, Dae-hyun, Gyeonggi-do (KR)
(74) Representative: Davies, Robert Ean

(57) **Abstract**

A method of grouping devices which are connected to a server , and a server applying the same, are provided. The method includes receiving sounds collected from the plurality of devices, respectively, detecting devices from among the plurality of devices which are located nearby each other, using information regarding a time slot at which the sounds are collected and the collected sounds, and grouping the detected devices into one group. The server includes a communicating unit which receives collected sounds from the plurality of devices, respectively; and a control unit which controls devices from among the plurality of devices which are detected to be located nearby each other, using information regarding a time slot at which the sounds are collected and the collected sounds, and grouping the detected devices into one group.

## Description

### CROSS-REFERENCE TO RELATED APPLICATIONS

This application claims priority from Korean Patent Application No. 10-2011-0019473, filed on March 4, 2011, in the Korean Intellectual Property Office, the disclosure of which is incorporated herein by reference in its entirety.

### BACKGROUND

### 1. Field

Methods and servers consistent with the disclosure provided herein relate to grouping devices. More particularly, the methods and servers relate to detecting nearby devices based on sounds collected from the respective devices; and grouping the devices into one group.

### 2. Description of the Related Art

As communication technologies advance, users are enabled to group different devices on networks and utilize a variety of services including data exchange between the grouped devices.

Generally, to group devices, users search unique IDs (e.g., IP, pin codes, device No. recorded on firmware, etc.) recorded on the grouping server and select the intended device.

However, there is a shortcoming in the related art. That is, the user has to input through many buttons and has to go through several stages in order to search intended devices of a grouping server. Most users, who do not have enough input devices or are unfamiliar with the use of the devices, feel it difficult to group the devices.. In addition, users feel that the time it takes to group the devices is too long.

One way to group devices is to call the devices existing within the same router and group responding devices into one group.

Since the above-mentioned method groups all the devices that respond into the same group, the group may include unintended devices. These unintended devices need to be screened separately. An additional problem is that the devices at the same location, but which use different wired/wireless networks, are not searchable.

With regard to methods utilizing location recognition systems such as GPS, it is also impossible to use a corresponding service in an area such as a building or subway, where signals are blocked. With regard to a method utilizing A-GPS system which uses base stations, the error range may be between several tens and several hundreds of meters, which makes it inappropriate or difficult to group the devices that are nearby.

Accordingly, a method which enables a user to group nearby devices, with improved ease, is needed.

### SUMMARY

Exemplary embodiments of the present inventive concept overcome the above disadvantages and other disadvantages not described above. Also, the present inventive concept is not required to overcome the disadvantages described above, and an exemplary embodiment of the present inventive concept may not overcome any of the problems described above.

According to one exemplary embodiment, a technical objective is to provide a method for receiving sounds collected from respective devices and grouping the devices into one group in response to the devices transmitting the sound with a predetermined degree of similarity within a predetermined time range, and a server applying the same.

In one exemplary embodiment, a method for grouping devices at a server to which a plurality of devices are connectable is provided, which may include receiving collected sounds from the plurality of devices, respectively, detecting devices located nearby each other from among the plurality of devices, using information regarding a time slot at which the sounds are collected and the collected sounds, and grouping the detected devices into one group.

The method may additionally include transmitting a message requesting the sounds at preset time intervals or based on a user command, where the sounds received from the plurality of devices includes receiving the sounds and receiving the information regarding the time slot at which the sounds are collected, in response to the message.

In one exemplary embodiment, the method may additionally include transmitting reference time information to the plurality of devices; where the sounds are collected in synchronization with the reference time information.

The detecting may include detecting the devices located nearby each other, in response to the devices transmitting the sounds with a predetermined degree of similarity within a predetermined time range.

The method may additionally include assigning preset code values according to sizes of the sounds received from the devices, in order to generate codes, where the detection may include detecting the devices located nearby each other, in response to determining that the devices transmitting the sounds have the same code, as a result of comparing the generated codes.

Meanwhile, the grouping may include grouping the devices detected to be located nearby each other depending on the availability for grouping of the respective devices, by automatically grouping devices permitting grouping into one group, and grouping devices not permitting grouping into one group after confirming that the devices permit grouping.

The method may additionally include transmitting grouping information to the devices grouped within the same group.

The method may additionally include relaying communications among the devices grouped within the same group.

In one exemplary embodiment, a server to which a plurality of devices are connectable, is provided. The server may include a communicating unit which receives collected sounds from the plurality of devices, respectively, and a control unit so that devices from among the plurality of devices are detected as being located nearby each other, using information about a time slot at which the sounds are collected and the collected sounds. The detected devices are grouped into one group.

The communicating unit transmits a message requesting the sounds at preset time intervals or based on a user command, and receives the sounds and the information regarding the time slot at which the sounds are collected, in response to the message.

The communicating unit transmits reference time information to the plurality of devices, and the sounds are collected in synchronization with the reference time information.

The control unit detects the devices to be located nearby each other, in response to the devices transmitting the sounds with a predetermined degree of similarity and within a predetermined time range.

The control unit assigns preset code values according to sizes of the sounds received from the devices to generate codes, and detects the devices located nearby each other, in response to determining that the devices transmit the sounds having the same code, as a result of comparing the generated codes.

The control unit groups the devices detected to be located near to each other depending on availability for grouping of the respective devices, by automatically grouping devices permitting grouping into one group, and grouping devices not permitting grouping into one group after confirming that the devices permit grouping.

The communicating unit transmits grouping information to the devices grouped within the same group.

The control unit relays communications between the devices grouped within the same group.

In various exemplary embodiments, a method for grouping devices into one group and a server applying the method are provided, in which collected sounds are received from the respective devices, which transmit the sounds with a predetermined degree of similarity within a predetermined time range, are grouped into one group. Accordingly, users are enabled to group intended devices with improved convenience and ease of use.

Furthermore, since the devices located near to each other are detected based on the sounds collected at the respective devices, only the intended devices located nearby each other can be grouped.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:

FIG. 1 is view illustrating a system implementing a method for grouping devices, according to an exemplary embodiment;

FIG. 2 is a block diagram illustrating the construction of a server, according to an exemplary embodiment;

FIG. 3 is a view provided to explain a method for generating codes corresponding to received sound, according to an exemplary embodiment;

FIGS. 4A and 4B are views provided to explain sounds transmitted by devices, according to an exemplary embodiment;

FIGS. 5A to 5C are views provided to explain a method for grouping devices, according to an exemplary embodiment; and

FIG. 6 is a flowchart provided to explain a method for grouping devices, according to an exemplary embodiment.

### DETAILED DESCRIPTION OF THE EXEMPLARY EMBODIMENTS

Certain exemplary embodiments of the present inventive concept will now be described in greater detail with reference to the accompanying drawings.

In the following description, same drawing reference numerals are used for the same elements, even in different drawings. The matters defined in the description, such as detailed construction and elements, are provided to assist in a comprehensive understanding of the present inventive concept. Accordingly, it is apparent that the exemplary embodiments can be carried out without those specifically defined matters. Also, well-known functions or constructions are not described since they would obscure the invention with unnecessary detail.

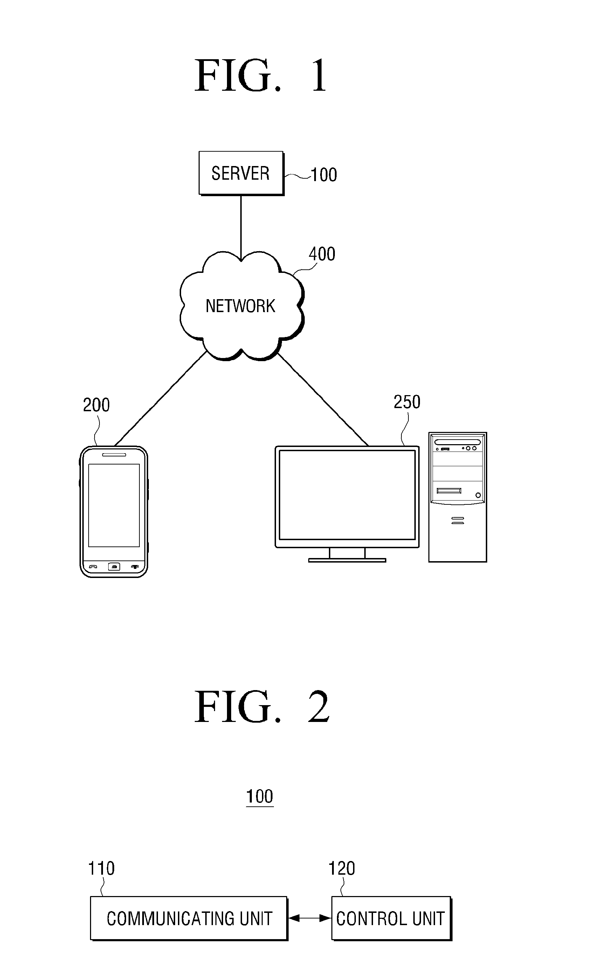

FIG. 1 is a view illustrating a system for implementing a method for grouping devices, according to an exemplary embodiment.

Referring to FIG. 1, a server 100 is connected to a first device 200 and a second device 300, and collects sounds from first and second devices 200, 250. The server may determine whether first and second devices 200, 250 are devices located nearby each other, using the collected sounds and information regarding a time slot where the sounds are collected, and in response to determining devices 200, 300 to be located nearby each other, grouping first and second devices 200, 250 into one group, and relaying communications therebetween.

Herein, the "nearby devices" or "devices nearby each other" refer to the devices at locations nearby each other and thus send out the same sound.

Further, first and second devices 200, 250 may include PCs, digital TVs, laptop computers, mobile phones, MP3 players, PMPs, digital cameras, PDPs, or navigations, which can be connected to a network 400, but not limited thereto. Additionally, any device may be implemented as first or second device 200, 250, provided that the device is equipped with a microphone to collect sound, and is connected to a network in order to transmit or receive data.

First and second devices 200, 250 may collect the sound generated at a location where each device exists and transmits the sound to server 100. To be specific, first and second devices 200, 250 may each collect the nearby sound using a microphone and transmit to the collected sound to server 100, as well as the information regarding the time slot where the sound is collected, via a network 400.

The "sound" herein may include sound or noise generated at a location nearby each device, which may be collected in synchronization with reference time information transmitted by server 100. To be specific, the sound may be collected from each device in synchronization with the time of starting and ending the collection of sound, which is the information included in the reference time information transmitted from server 100, and transmitted to server 100.

Meanwhile, although the sound is explained above as being collected in synchronization with the reference time information transmitted by server 100, this is written only for illustrative purposes. As another example, first and second devices 200, 250 may collect the sound based on a standard time transmitted from the sources thereof, and transmit the sound and the standard time at which the sound is collected to server 100. For example, if first and second devices 200, 250 are mobile phones, each device may collect the sound using the standard time received from the base station, and transmit to server 100 the collected sound along with the times of starting and ending collecting the sound, based on the standard time.

It is therefore possible to align the time of starting the collection of sound and time of ending the collection of sound at respective devices, and server 100 is enabled to compare the sounds transmitted by the respective devices within the aligned time range in order to detect the nearby devices.

Network 400 herein refers to a communication network to which first and second devices 200, 250 are connected. The network 400 includes internet. Server 100, and first and second devices 200, 250 may be connected to the internet via the same wired/wireless communication network or different communication networks (e.g., Wifi, 3G communication network, etc.).

Meanwhile, server 100 may receive unique ID information (e.g., IP information of the devices connected to the internet) of the respective devices from first and second devices 200, 250 connected to network 400 and store the received information in advance.

Although it is depicted above as if only first and second devices 200, 250 are connected to network 400, this is written only for illustrativ purposes. Accordingly, other devices may be connected to network 400.

FIG. 2 is a block diagram illustrating the construction of a server according to an exemplary embodiment. Referring to FIG. 2, server 100 includes a communicating unit 110 and a control unit 120.

Communicating unit 110 may transmit and receive data to and from a plurality of devices via a network. This operation may be controlled through control unit 120.

To be specific, communicating unit 110 may transmit reference time information to a plurality of devices connected to the network. The "reference time information" may refer to the time of starting the collection of sound and time of ending the collection of sound at respective devices.

Further, communicating unit 110 may receive the sounds collected at the respective devices and information regarding time slots where the sound is collected, from the plurality of devices.

To be specific, communicating unit 110 may receive information including the sound collected at the respective devices in synchronization with the reference time information, the time of starting the collection of sound, and the time of ending the collection of sound. Meanwhile, as explained above, a plurality of devices may collect the sounds based on the standard time received from the sources thereof, and communicating unit 110 may receive information including the sound collected at the plurality of devices, in synchronization with the standard time information, as well as the time at which the sound is collected.

In the example explained above, communicating unit 110 may transmit to the respective devices a message to request sound and the time at which the sound is collected, in the form of a user command or a command that is transmitted to the respective devices at predetermined time intervals.

Further, communicating unit 110 may receive from the respective devices device the information (e.g., manufacturer, date of manufacture, serial number, model name, etc.) and unique ID information (e.g., IP information of a device connected to the internet).

In the example explained above, communicating unit 110 may transmit a message to the respective device to request the device information and the unique ID information, in the form of a user command or a command which is transmitted to the respective devices at preset time intervals, via the network.

Further, communicating unit 110 may transmit a message to inquire about the availability for grouping a device which does not permit grouping. Communicating unit 110 may receive a message regarding the availability for grouping. Herein, the message inquiring about availability for grouping a device that does not permit grouping may appear on the device in the form of a user interface window (not illustrated).

Further, communicating unit 110 may transmit grouping information to the devices grouped into one group.

To be specific, communicating unit 110 may transmit the result of grouping, unique ID information or device information of the devices in the same group, among the devices. For example, if first and second devices 200, 250 connected to the internet are determined to be located at nearby locations and thus are grouped into one group, communicating unit 110 may transmit the result of grouping with the second device to the first device and the IP and device information of the second device, and also transmit to the second device the information regarding the first device.

Control unit 120 may control the overall operation of the respective components of server 100. To be specific, control unit 120 may control communicating unit 110 to transmit reference time information to the plurality of devices connected to the network; receive information including sound collected at the respective devices and time slots at which the sound is collected, and receive the device information and unique ID information of the respective devices.

Control unit 120 may also detect the nearby devices from among the plurality of devices connected to the network, group the detected devices into one group, and control the communications between the devices in the same group.

To that end, control unit 120 may detect nearby devices from among the plurality of devices connected to the network, by utilizing the information about the time slot at which the sound is collected, and the sound.

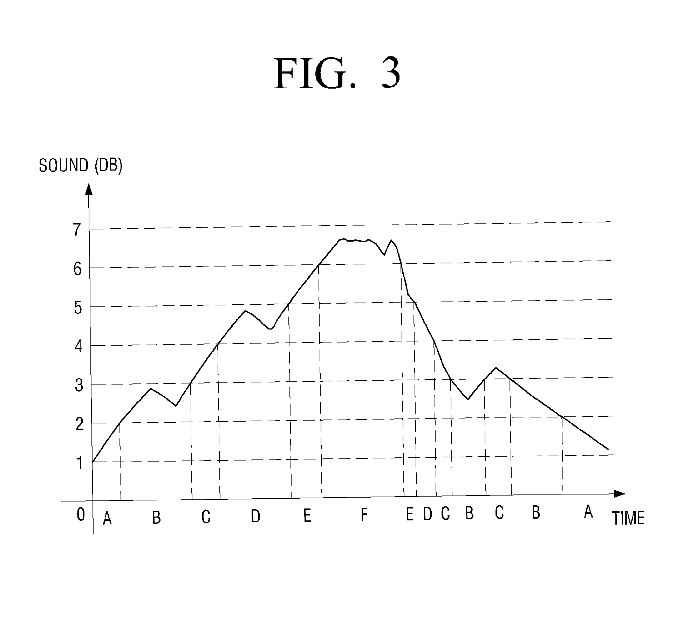

To be specific, control unit 120 may detect the nearby devices in response to the devices having sound with a predetermined degree of similarity within a predetermined time range. That is, control unit 120 assigns preset code values according to the sounds received from the respective devices in synchronization with the reference time; generates codes corresponding to the respective sounds, and compares the generated codes in order to detect the devices transmitting the sounds with a predetermined degree of similarity. To that end, control unit 120 may convert the received sound into a decibel (dB) value and assign preset code values at predetermined decibel intervals in order to generate the codes which correspond to the respective sounds. This will be explained in greater detail below with reference to FIG. 3, and with reference to control unit 120 which implements the corresponding operation.

FIG. 3 is a view provided to explain a method for generating a code corresponding to the received sound, according to an exemplary embodiment.

Control unit 120 represents the sound received from the device in decibel units based on the size of the received sound. By way of an example, FIG. 3 illustrates that the sound received from the device has from 1 (dB) to 7(dB).

Control unit 120 may assign the sounds converted into decibel values with the preset code values at predetermined decibel intervals to thus generate the codes which correspond to the respective sounds. Referring to FIG. 3, 1 (dB) to 2(dB) is assigned with code value 'A', 2(dB) to 3(dB) with 'B', 3(dB) to 4(dB) with 'C', 4(dB) to 5(dB) with 'D', 5(dB) to 6(dB) with 'E', and 6(dB) to 7(dB) with 'F'. As a result, the received sound may be represented as a code 'ABCDEFEDCBCBA'.

After that, control unit 120 may compare the generated codes which are generated based on the sounds received from the respective devices, detect the devices transmitting the sounds with the same codes, and group the detected nearby devices into one group.

Meanwhile, although control unit 120 converts the received sound into decibel values and generates code in the examples explained above, this is written only for illustrative purpose. Alternatively, codes corresponding to the sizes of the received sounds may be generated without having to involve conversion into decibel values.

Furthermore, although the preset codes are set in order of A, B, C, D, E, F at 1(dB) intervals in the examples explained above, this is written for illustrative purposes only. Alternatively, the code values may be set differently, depending on the variations in the size of the received sound.

For example, if the sizes of the sounds received from the respective devices change rapidly according to time, preset code values may be assigned across a narrower decibel interval.

Further, although control unit 120 generates codes by assigning the sound converted into decibel values with the preset code values at predetermined decibel interval, this is written only for illustrative purposes. The generated codes may correspond to the received sounds by different methods.

For example, control unit 120 may generate codes by comparing the sizes of the sounds at preset time intervals. To be specific, control unit 120 may assign different preset code values according to a difference of sound size at (t) second and (t+1) second, to thus generate a code corresponding to the sound. That is, control unit 120 may preset code value 'A' if difference of sound sizes is 1(dB), 'B' if difference of sound sizes if 2(dB), 'C' and 'D' if differences of sound sizes are 3(dB) and 4(dB), respectively. Accordingly, if the size of sound is 3(dB) at (t) second, 5(dB) at (t+1) second, 8(dB) and 7(dB) at (t+2) and (t+3) seconds, respectively, the sound from (t) to (t+3) seconds may be represented as a code 'BCA'.

Referring back to FIG. 2, depending on preset availability for grouping, control unit 120 may automatically group devices into one group in response to such devices being nearby each other and permit grouping. If the devices do not permit grouping, control unit 120 may inquire about the availability of grouping such devices and group the devices into one group.

For example, if control unit 120 detects the first, second and third devices to be nearby devices, but the second device is not available for grouping, control unit 120 may control communicating unit 110 in order to transmit a message to the second device requesting to permit grouping. If the second device sends out a message to permit grouping as a response, control unit 120 groups the first, second and third devices into one group. However, if second device sends out a message rejecting grouping as a response, control unit 120 groups the first and third devices into one group.

To that end, control unit 120 may receive information regarding the availability for grouping of the respective devices connected to the network and store in advance the received information in a storage unit (not illustrated). Control unit 120 may also separately request the information regarding the availability for grouping of the respective devices within the same group.

Control unit 120 may also relay communications between the devices within the same group. Specifically, control unit 120 may transmit the data received from a first device to a second device in the same group in order to enable data transmission and reception between devices within the same group. The control unit may utilize the unique ID information.

In relaying communication between the devices within the same group, control unit 120 may encode the data transmitted from the respective devices to the other devices within the same group, by using the codes which were generated based on the sounds received from the respective devices. If the respective devices of the same group generate the codes based on the collected sounds in the same manner as server 100, each device of the group can decode the data encoded by control unit 120 using the code the device generates.

Meanwhile, although it is explained above that server 100 requests the sounds collected at the respective devices, information regarding the time slot at which the sounds are collected and unique ID information of the devices to group the nearby devices among the devices connected to the network, this is written only for illustrative purpose. Server 100 may detect and group the nearby devices even when server 100 does not request the above information, in response to server 100 receiving the sounds collected at the respective devices, information about the time slot at which the sounds are collected, and unique ID information of the devices.

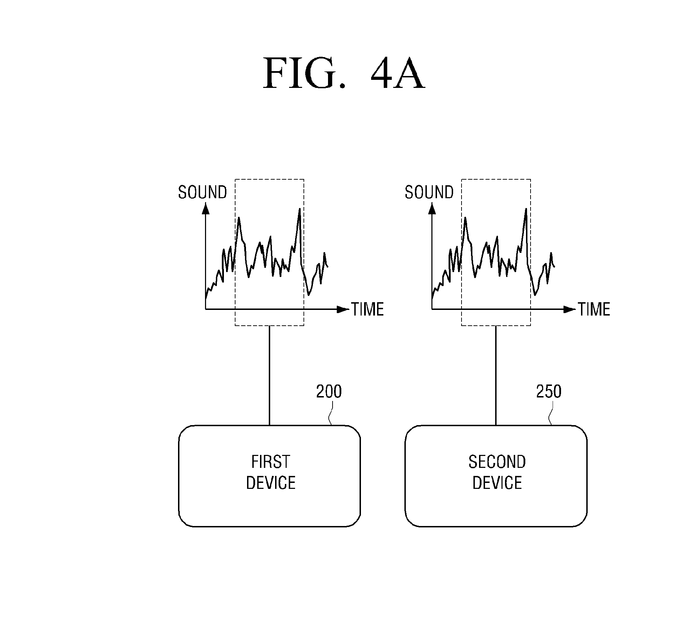

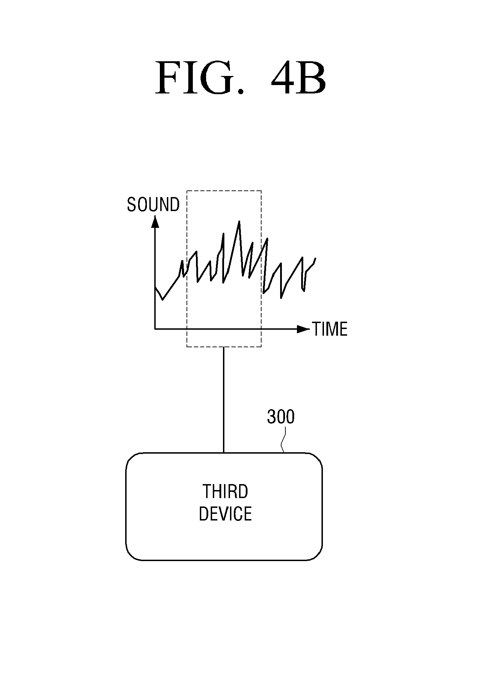

FIGS. 4A and 4B are views provided to explain sound transmitted by a device according to an exemplary embodiment.

Referring to FIGS. 4A and 4B, first and second devices 210, 250 are at locations nearby each other, and third device 300 is at a location different from first and second devices 210,250. That is, first and second devices 210, 250 provide the similar or same sounds collected at the same time slot, since two devices 210, 250 are near to each other. However, third device 300 provides a sound different from the sounds collected at the first and second devices 210, 250, since third device 300 is at a location different from first and second devices 210,230.

As explained above, the same or similar sounds are collected at the same time slot and location, while there is little possibility that the same sound would be collected from the different locations at the same time slot. Based on this, the server receives the sounds collected at the devices connected to the network, and detects and groups the devices located nearby each other into one group.

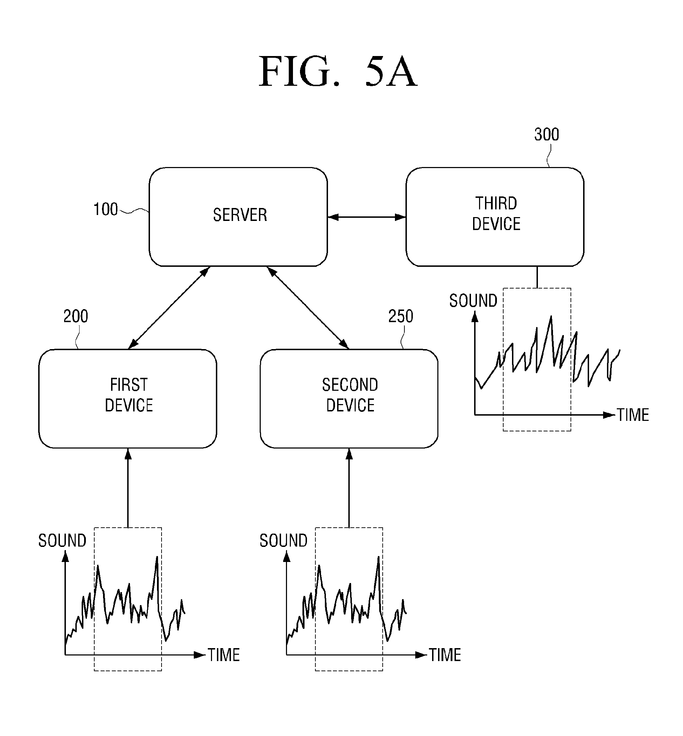

FIGS. 5A to 5C are views provided to explain a method for grouping devices, according to an exemplary embodiment. Server 100 and respective devices 210, 250, 300 are connected to each other via the network, but such network is not illustrated in FIGS. 5A to 5C, for convenience of explanation. It is also assumed that first and second devices 210, 250 are located nearby each other and thus collect the same sounds therearound, while third device 300 is at a predetermined distance from first and second devices 210, 250 and thus collects sounds different from those at first and second devices 210, 250.

Referring to FIG. 5A, server 100 transmits reference time information to respective devices 210, 250, 300. To be specific, server 100 transmits information regarding the time for starting and ending the collection of sounds at the respective devices, to respective devices 210, 250, 300, which are connected to the network (not illustrated).

Accordingly, devices 210, 250, 300 collect the sounds generated around devices 210, 250, 300 based on the information received regarding the starting and ending time for collecting the sounds, and transmit the collected sounds to server 100, via the network.

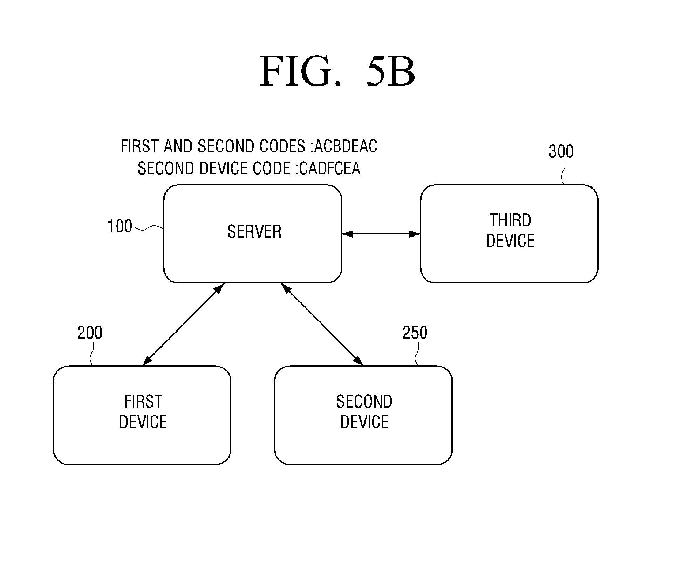

Server 100 generates predetermined codes according to the sizes of the collected sounds, and compares the codes generated according to the received sounds in order to detect the devices which are nearby each other. Specifically, server 100 assigns preset code values according to the size of the sound received from each device in order to thereby generate the code corresponding to each received sound, and compares the generated codes in order to detect the devices nearby each other. Referring to FIG. 5B, the sounds received from first and second devices 210, 250 are generated to the same code 'ACBDEAC', while the sound received from third device 300 is generated to code 'CADFCEA'. Accordingly, server 100 detects first and second devices 210, 250 generating the same code as the devices are nearby each other, while detecting third device 300 and generating the different code as the device located away from first and second devices 210, 250.

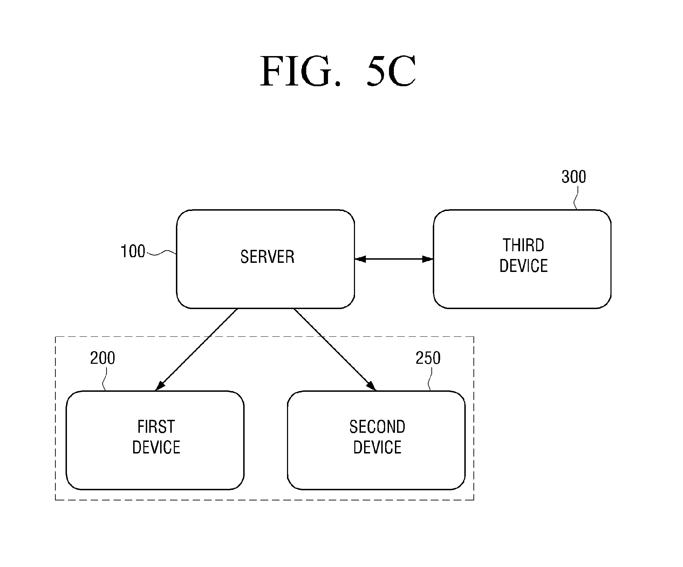

Thereafter, server 100 may group the devices detected as nearby devices into the same group, and relay communications between the devices within the same group. Referring to FIG. 5C, server 100 detects and groups first and second devices 210, 250, which transmit the same sound, with the same code into the same group, while detecting third device 300 which transmits the sound having different code as a device located away from first and second devices 210, 250. Accordingly, server 100 does not group third device 300 in the same group as first and second devices 210, 250.

Thereafter, server 100 may relay communications between devices within the same group.

In an exemplary embodiment explained above, the devices are detected as the devices located nearby each other, in response to a match between the codes generated, based on the sounds transmitted from the devices. However, this should not be construed as limiting. In an alternative example, devices may be detected to be located near to each other, even when the codes generated according to the sounds transmitted from the devices partially overlap. In this example, the number of overlapping code values may be pre-defined by the user.

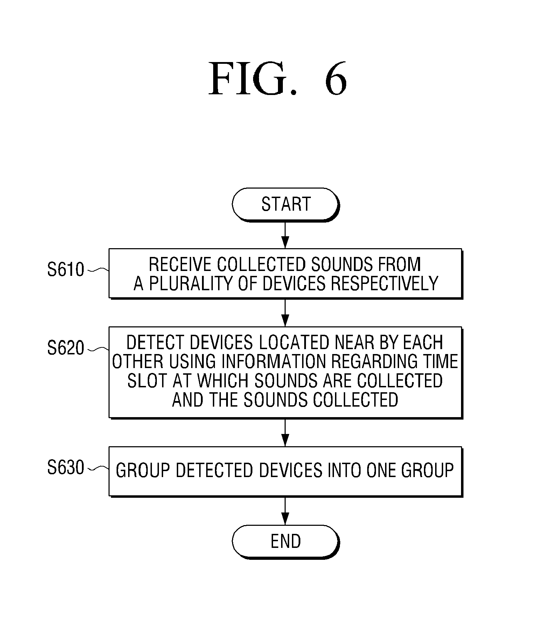

FIG. 6 is a flowchart provided to explain a method for grouping devices, according to an exemplary embodiment.

First, at S610, if a plurality of devices are connected to each other via a network, the sounds collected at the respective devices are received. A message requesting the sounds may be transmitted at preset time intervals or based upon a user command, and the sounds as well as the information regarding the time at which the sounds were collected, may be received by a server as a response to the request message.

At S620, devices located nearby each other are detected, using the sounds as well as the information regarding the time at which the sounds were collected.

In one exemplary embodiment, the devices transmitting the sounds with a predetermined degree of similarity within a predetermined time range may be detected to be the devices located nearby each other. Specifically, codes may be generated by assigning preset code values according to the sizes of the sounds received from the respective devices, and the devices with the same codes may be detected as the devices nearby each, other based on a comparison of the generated codes with each other.

At S630, the devices detected as being nearby each other are grouped into one group. Herein, it is possible to transmit grouping information to the devices in the same group, and also relay communications between the devices in the same group.

At S610, it is possible to transmit reference time information to a plurality of devices, in which case sounds can be collected in synchronization with the reference time information. Furthermore, the sounds may be collected at the respective devices, based on the standard time each device receives from a corresponding source.

At S630, the devices may be grouped together depending on availability for grouping. That is, among the devices detected to be located nearby each other, the devices permitting grouping may be automatically grouped, while devices not permitting grouping are grouped together after confirming that the devices permit grouping.

The exemplary embodiments as explained above, may be implemented by a server, or by any other server which may not have all the components explained above.

Furthermore, in one exemplary embodiment, a computer-readable recording medium containing a program for executing the above-explained method for grouping devices, may be provided. The computer-readable recording medium may encompass all types of non-transitory recording devices to store data to be read out by a computer system. The computer-readable recording medium may include, for example, ROM, RAM, CD-ROM, magnetic tape, floppy disk, or optical data storing device. The computer-readable recording medium may be distributed over computer systems connected via a network so that computer-readable codes can be stored and executed in the distributed manner.

The foregoing exemplary embodiments and advantages are merely exemplary and are not to be construed as limiting the present invention. The present teaching can be readily applied to other types of apparatuses. Also, the description of the exemplary embodiments of the present inventive concept is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of grouping a plurality of devices which are connectable to a server, the method comprising:
receiving collected sounds from the plurality of devices, respectively;
detecting devices, from among the plurality of devices, which are located nearby each other using information regarding a time slot at which the sounds are collected and the collected sounds; and
grouping the devices detected into one group based on the obtained information.

2. The method of claim 1, further comprising transmitting a message requesting sounds at preset time intervals or based on a user command, wherein the receiving collected sounds from the plurality of devices includes receiving, in response to the message, the sounds and information regarding the time slot at which the sounds are collected.

3. The method of claim 1 or 2, further comprising transmitting reference time information to the plurality of devices, wherein the sounds are collected in synchronization with the reference time information.

4. The method of anyone of claims 1 to 3, wherein the detecting comprises detecting the devices located nearby each other, in response to the devices transmitting sounds with a predetermined degree of similarity within a predetermined time range.

5. The method of claim 4, further comprising assigning preset code values according to sizes of the sounds received from the devices in order to generate codes, wherein the detecting includes detecting the devices located nearby each other, in response to determining that the devices transmitting the sounds have the same code, as a result of comparing the generated codes.

6. The method of anyone of claims 1 to 5, further comprising:
grouping the detected devices which are located nearby each other, depending on availability for grouping of the respective devices by,
automatically grouping devices which permit grouping into one group; and
grouping devices which do not permit grouping into one group after confirming that the devices permit grouping.

7. The method of anyone of claims 1 to 6, further comprising transmitting grouping information to the devices grouped within the same group.

8. A server to which a plurality of devices are connectable, the server comprising:
a communicating unit which receives collected sounds from the plurality of devices, respectively; and
a control unit which controls devices from among the plurality of devices which are detected to be located nearby each other, using information regarding a time slot at which the sounds are collected and the collected sounds, and grouping the detected devices into one group.

9. The server of claim 8, wherein the communicating unit transmits a message requesting the sounds at preset time intervals or based on a user command, and receives, in response to the message, the sounds and the information regarding the time slot at which the sounds are collected.

10. The server of claim 8 or 9, wherein the communicating unit transmits reference time information to the plurality of devices, and the sounds are collected in synchronization with the reference time information.

11. The server of anyone of claims 8 to 10, wherein the control unit detects the devices located nearby each other, in response to the devices transmitting the sounds with a predetermined degree of similarity within a predetermined time range.

12. The server of claim 11, wherein the control unit assigns preset code values according to sizes of the sounds received from the devices in order to generate codes, and detects the devices located nearby each other, in response to determining that the devices transmitting the sounds have the same code, as a result of comparing the generated codes.

13. The server of anyone of claims 8 to 12, wherein the control unit groups the detected devices which are to be located nearby each other, depending on availability for grouping of the respective devices by,
automatically grouping devices which permit grouping into one group, and
grouping devices which do not permit grouping into one group after confirming that the devices permit grouping.

14. The server of anyone of claims 8 to 13, wherein the communicating unit transmits grouping information to the devices grouped within the same group.

15. The server of anyone of claims 8 to 14, wherein the control unit relays communication among the devices grouped within the same group.
